(19) **Europäisches Patentamt / European Patent Office / Office européen des brevets**

(11) **EP 1 969 405 B1**

(12) # EUROPEAN PATENT SPECIFICATION

(45) Date of publication and mention of the grant of the patent:
**15.01.2014 Bulletin 2014/03**

(21) Application number: **05855994.9**

(22) Date of filing: **29.12.2005**

(51) Int Cl.:
*G02B 6/12* (2006.01)          *G02B 6/26* (2006.01)
*G02B 6/28* (2006.01)          *G02B 6/34* (2006.01)
*G02B 6/42* (2006.01)

(86) International application number:
**PCT/US2005/047513**

(87) International publication number:
**WO 2007/075175 (05.07.2007 Gazette 2007/27)**

(54) **THERMAL CONTROL OF OPTICAL COMPONENTS**

THERMISCHE REGELUNG OPTISCHER KOMPONENTEN

CONTRÔLE THERMIQUE DE COMPOSANTS OPTIQUES

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**17.09.2008 Bulletin 2008/38**

(73) Proprietor: **NeoPhotonics Corporation San Jose, CA 95134 (US)**

(72) Inventors:
- **YAN, Ming**
  **Pleasanton, California 94588 (US)**
- **TICKNOR, Anthony, J.**
  **Cupertino, California 95014 (US)**
- **HO, Calvin**
  **San Jose, CA 95123 (US)**
- **XU, Hao**
  **San Jose, California 95131 (US)**
- **WEAVER, Jason**
  **San Jose, California 95138 (US)**
- **TARTER, Thomas, S.**
  **San Jose, California 95129 (US)**
- **LAM, Jane**
  **San Jose, California 95131 (US)**

(74) Representative: **Arth, Hans-Lothar**
**ABK Patent Attorneys**
**Jasminweg 9**
**14052 Berlin (DE)**

(56) References cited:
EP-A2- 1 111 418          US-A- 5 999 671
US-A1- 2002 035 835          US-A1- 2002 159 698
US-A1- 2004 202 421          US-B1- 6 498 878
US-B2- 6 681 073          US-B2- 6 853 759

- MING YAN ET AL: "Integrated thin film heater and sensor with planar lightwave circuits" SEMICONDUCTOR THERMAL MEASUREMENT AND MANAGEMENT SYMPOSIUM, 2004. TWENTIETH ANNUAL IEEE SAN JOSE, CA, USA MARCH 9-11, 2004, PISCATAWAY, NJ, USA,IEEE, 9 March 2004 (2004-03-09), pages 185-190, XP010714776 ISBN: 978-0-7803-8364-7
- YAN M ET AL: "Individual control of multiple AWGs on a monolithic chip using integrated thin film heaters and sensors" 2005 OPTICAL FIBER COMMUNICATIONS CONFERENCE TECHNICAL DIGEST (IEEE CAT. NO. 05CH37672) IEEE PISCATAWAY, NJ, USA,, vol. 2, 6 March 2005 (2005-03-06), pages 87-89, XP010831418 ISBN: 978-1-55752-783-7

**Description**

TECHNICAL FIELD

The present invention relates generally to fiber optic communications, and, more particularly, to tuning and temperature stabilization of optical waveguide filters and other temperature-sensitive integrated optical components.

BACKGROUND

Fiber optic technology has now been used in telecommunications for several decades. In high-bandwidth applications, optical fiber has virtually replaced old-fashioned copper wire. The reasons for this transition are many. Optical fiber's advantages over copper wire include wide bandwidth, low signal attenuation, light weight, immunity to electromagnetic interference, absence of electrical sparking, virtual elimination of crosstalk, physical flexibility, small size, and low cost.

In optical networks, an electrical signal to be transmitted modulates light, typically of the infrared variety with a wavelength in the 1.3 or 1.5 $\mu$m bands. The modulated light is transmitted over an optical fiber, received, and demodulated to recover a copy of the original electrical signal.

A significant number of fiber-optic networks are intended for the commercial transport of data. As such, the network operator seeks wide bandwidth capability at low cost, with high reliability, fidelity, efficiency, and security. The transmission bandwidth of a single fiber is quite high. Cost-effective systems that transport data at 10 Gbits/s (OC-192) and 40 Gbits/s (OC-768) on a single wavelength channel are presently available'. But the total throughput theoretically realizable from a fiber is much higher, several tens of Terahertz. Dense wavelength-division multiplexing (DWDM) systems have evolved to use more of this available spectrum. In such systems, many different wavelength channels are used concurrently to transmit data-carrying signals over the same fiber. Systems using up to 160 different wavelengths that carry as much as 10 Gbit/s each and provide a total capacity of 1.6 Tbit/s in a single fiber have been developed. For fiber links requiring less capacity, a less dense architecture, called coarse wavelength-division multiplexing (CWDM), with fewer channels at more widely spaced  wavelengths, may be used in similar fashion. DWDM and CWDM will be collectively referred to as wavelength-division multiplexing, or WDM.

In WDM optical networks, it is necessary to multiplex (combine) multiple independent wavelengths when transmitting, and demultiplex (separate) those wavelengths back into individual channels when receiving. Multiplexing and demultiplexing functions are performed by optical filters, typically thin-film interference filters, waveguide interferometers such as arrayed-waveguide gratings (AWG's), or fiber Bragg gratings. The nodes of an optical network typically provide both types of functions, extracting some or all of the individual wavelength channels on one or more inbound fibers, and recombining some of those wavelengths with new wavelengths carrying data from local sources into one or more outbound fibers. Optical filters that perform these and other functions are distributed abundantly throughout a WDM optical network.

Significant costs are associated with converting data from optical to electrical representation, or from electrical to optical representation. Therefore, it is usually preferred that data that is not bound to or from the local traffic of a node be passed through the node transparently, that is with no conversion or non-linear processing. Because of the transparency, a given optical signal may pass through several optical filters on its route through the network. To avoid excessive degradation of signal fidelity, the precision and stability of the optical filter bandshapes and phase responses need to be more stringently controlled in a distributed network than for direct connections.

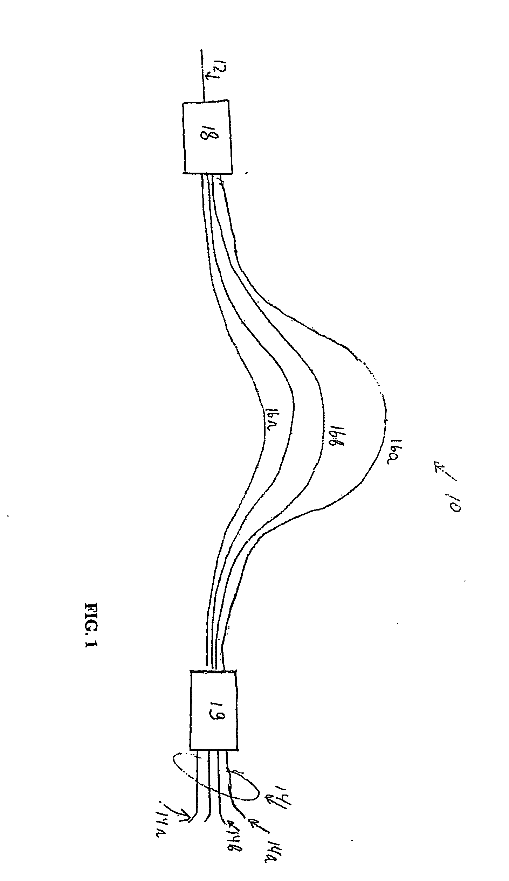

AWG's are fabricated from integrated planar waveguides and scale elegantly to higher channel counts. Although they are the most recently developed of the commonly-applied filter architectures, AWG's are beginning to dominate applications where eight or more optical channels are being multiplexed or demultiplexed, because of their high performance and cost-effectiveness. Figure 1 illustrates a typical arrayed waveguide grating 10 with an input waveguide 12, one or more output waveguides 14, a phased array of waveguides 16 arranged side-by-side, and a pair of focusing slab regions 18 and 19. The focusing slab region 18 couples light from the input waveguide 12 into the near end of the waveguides of the phased array 16, while the focusing slab region 19 couples the light emerging at the far end of the waveguides of the phased array 16 into the output waveguides 14. The waveguides of the phased array 16 have different lengths, with a constant optical path-length difference $\Delta L_{op}$ between neighboring waveguides.

When monochromatic light illuminates the input waveguide 12, the slab 18 spreads the energy of the light into the near ends of the waveguides 16a-16n. Because of the differing optical path-lengths of the waveguides 16a-16n, the light emerging at the far ends of the waveguides 16a-16n has different phases, depending on the particular waveguide traveled by the light. After the emerging light is combined by the focusing slab region 19, the different phases interfere constructively at some point, depending on the wavelength of the light. If the point is coincident with one of the output waveguides 14, the light is coupled into this optical waveguide. Changing the wavelength of the monochromatic light changes the point of constructive interference, moving it from one output waveguide (e.g., 14a) to another (e.g., 14b).

As is known from linear system theory, a non-monochromatic WDM light signal having a spectral distribution of $\sum_i c_i * \lambda_i$ can be treated simply as a collection of individual monochromatic signals $c_i * \lambda_i$. Therefore, if the input waveguide 12 is illuminated with this WDM signal, each of its constituent wavelength components $\lambda_i$ will focus at a different point and will be coupled into a different output waveguide 14. The constituent wavelength channels $\lambda_i$ of the WDM signal are thus physically separated - *i.e.,* demultiplexed - into different output waveguides 14. Through reciprocity principle applicable to electromagnetic fields, if a wavelength $\lambda_j$ incident on the input waveguide 12 is channeled into an output waveguide $14_j$, then the same wavelength channel $\lambda_j$ incident on the output waveguide $14_j$ will be channeled - *i.e.,* multiplexed - into the input waveguide 12. The arrayed waveguide grating 10 can thus be used as both a multiplexer and a demultiplexer, depending on which end is selected as the input.

Planar waveguide technology used for fabricating AWG's is an optical integration technology. As optical network nodes become more and more complex, the AWG becomes just one of multiple optical circuit elements integrated onto a chip. Examples of devices having higher scales of integration include multiplexer/demultiplexer matched pairs, add-drop multiplexers, programmable wavelength blockers, and wavelength-selective routing switches. There are of course other integrated optical circuits that may include one or more arrayed waveguide gratings.

One way of more stringently controlling the precision and stability of the optical filter bandshapes and phase responses of AWG's is to control the center wavelength of the AWG. The center wavelength $\lambda_c$ of an AWG depends on the phase shifts through the phased waveguides of the AWG. ("Center wavelength" means the wavelength that is optimally or near optimally channeled into a particular output waveguide.) The phase shifts depend on the refractive index of the waveguides, which in turn depends on the temperature of the waveguides. For silica-based waveguides, the magnitude of the temperature coefficient of the refractive index $(\frac{dn}{dT})$ is of the order of 10$^{-5}$/(°C), or 10 parts per million per degree Celsius, which translates into a similar magnitude of the wavelength temperature coefficient $(\frac{d\lambda}{dT})$, and into a temperature frequency coefficient $(\frac{df}{dT})$ of about 2 GHz/(°C) at 1.5 $\mu$m wavelength. For channel spacing of about 100 GHz and less, operation of the arrayed waveguide grating over the commercial temperature range of even 60°C is problematic. Moreover, without expensive trimming it is difficult to manufacture arrayed waveguide gratings having sufficient center wavelength accuracy for the relatively narrow channel spacing. For this reason, arrayed waveguide gratings and similar optical components are center wavelength-stabilized.

Most commonly this stabilization is accomplished by actively regulating the temperature of the optical chip. According to this method, a heating element uniformly elevates the temperature of the component to a set-point temperature. Varying the selection of the set-point temperature allows tuning of the grating to a chosen center wavelength, eliminating or decreasing the need for trimming and increasing yields. In one variation on the basic method of thermally tuning an arrayed waveguide grating, an integrated heater is patterned to cover longer lengths of some waveguides of the phased array than of other waveguides of the array. If the shape of the heater is properly chosen, localized heating generated by the operation of the patterned heater causes an increase in the effective optical path-length differences between neighboring waveguides. In other words, it causes tilting of the waveform to increase (or decrease) by a higher factor than would have resulted from a heater uniformly distributed over the array's waveguides. Because the patterned heater affects the phased waveguides unevenly, the sensitivity of the center wavelength to temperature of the heater increases, and the tuning range of the grating increases along with it. The shifting of the center wavelength thus becomes more efficient, and less thermal energy can be applied to produce the same thermo-optic tilt of the output waveform. In this document, such patterned heaters will be referred to as "efficient patterned heaters."

Optical integrated circuits may contain arrayed waveguide gratings, waveguides, optical couplers, splitters, three dimensional optical memory devices, Bragg gratings, optical attenuators, optical splitters, optical filters, optical switches, lasers, modulators, interconnects, optical isolators, optical add-drop multiplexers (OADM), optical amplifiers, optical polarizers, optical circulators, phase shifters, optical mirrors/reflectors, optical phase-retarders, optical detectors, and other optical components. It should be understood that optical integrated circuits are not 'circuits' in the strict sense (*e.g.,* they do not have 'ground' paths), although they are commonly called optical integrated circuits by analogy to electrical integrated circuits. As in the case of electrical (semiconductor) integrated circuits, fabrication of several optical components on a shared substrate results in several advantages, including substantial cost savings during manufacture, and smaller size of the assembly. Multi-device optical integrated circuits built with planar waveguides on common substrates are known as "planar lightwave circuits," or PLCs.

In order to fabricate an AWG directly to the 100 GHz optical frequency grid commonly used for DWDM, the accuracy of absolute index of refraction would need to be better than $10^{-5}$. This level of process control is presently difficult to achieve. As has already been discussed, actual manufacturing variations can be compensated for by adjusting the selected operating temperature for active stabilization. It is unlikely that two AWG's on the same chip would require the same stabilization temperature. Given the currently employed methods of wavelength stabilization, it is challenging to control thermally more than one grating on a given PLC.

The document entitled "Individual control of multiple AWGs on a monolithic chip using integrated thin film heaters and sensors", by YAN M ET AL, 2005 OPTICAL FIBER COMMUNICATIONS CONFERENCE TECHNICAL DIGEST (IEEE CAT. NO. 05CH37672) IEEE PISCATAWAY, NJ, USA,, vol. 2, 6 March 2005 (2005-03-06), pages 87-89, discloses two AWG's regulated in temperatures through thermal resistances and temperature indications provided by two temperature sensors disposed near the AWG's.

SUMMARY

A need thus exists for methods for precisely temperature-stabilizing optical components. Another need exists for lightwave circuits that can include multiple temperature-stabilized components, particularly arrayed waveguide gratings, on a common substrate. A further need exists for methods of controlling the temperature of optical components with high accuracy to keep the center wavelengths of the components stable.

The present invention is directed to apparatus and methods that satisfy one or more of these needs. The first device herein disclosed is an integrated optical device that comprises an optical component having an optical wavelength response (*e.g.*, center wavelength) that is a function of temperature of the optical component, and a heating element disposed in proximity to the optical component to be capable of inducing temperature elevation of the optical component. At a first effective temperature of the optical component, the optical wavelength response of the optical component is substantially equal to a predetermined wavelength. The integrated optical device further comprises a temperature-sensing element capable of generating indications of temperature at location of the temperature-sensing element, wherein temperature elevations induced at the location by the heating element exceed corresponding temperature elevations induced by the heating element in at least one region of the optical device. Both the temperature-sensing element and the heating element can be coupled to a temperature controller, which receives the indications of temperature from the temperature sensing element and sets power dissipated in the heating element based on the indications of temperature so as to drive the optical wavelength response to the predetermined wavelength. The design of the integrated optical device is such that, during stable thermal state of the optical device, indications of temperature generated by the temperature-sensing element vary as a first substantially linear function of the power dissipated in the heating element, and effective temperature of the optical component varies as a second substantially linear function of the power dissipated in the heating element.

The first substantially linear function is characterized by a first thermal constant that is the rate of increase in the indications of temperature with the power dissipated in the heating element, while the second substantially linear function is characterized by a second thermal constant that is the rate of change in the optical wavelength response with the power dissipated in the heating element.

In operation, the temperature controller estimates global temperature of the optical component during a first period based on (i) one or more temperature indications received from the temperature-sensing element during the first period, (ii) the power dissipated by the heating element during the first period, and (iii) the first thermal constant. The temperature controller then determines a set-point to which the temperature controller drives temperature indications of the temperature-sensing element during a second period that follows the first period by making the following calculations:

(1) computing a difference between the first effective temperature and the estimate of the global temperature of the optical component during the first period;
(2) computing a ratio of the first thermal constant to the second thermal constant;
(3) computing a product of the difference and the ratio, and
(4) adding the product to the estimate of the global temperature of the optical component during the first period to obtain the set-point.

Another device includes two sets of parts described above, *i.e.,* two optical components, two heating and temperature-sensing elements, and two temperature controllers. Each set of components functions substantially independent of the other set to stabilize each optical component (e.g., an optical filter) at the component's specific effective temperature corresponding to a particular center wavelength. The two center wavelengths can be the same, although the effective temperatures of the two gratings will typically be different even if the two wavelengths are the same. Optionally, a single temperature controller can be used to stabilize both optical components.

The integrated optical device of the invention comprises first and second optical components, first and second heating elements, a temperature-sensing element, and a temperature controller. The first optical component has a first optical wavelength response that is a function of temperature of the first optical component, wherein the first optical wavelength response is substantially equal to a first predetermined wavelength at a first effective temperature of the first optical component. The first heating element is disposed in proximity to the first optical component and is capable of inducing temperature elevation of the first optical component, while the temperature-sensing element is capable of generating indications of temperature at a first location of the first temperature-sensing element. The first location is such that temperature elevations induced at the first location by the first heating element exceed corresponding temperature elevations induced by the first heating element in a first region remote from the first location of the optical device. Typically, the first temperature sensing element is disposed near the first heating element and the first optical component. The temperature controller can be coupled to the first heating element and to the first temperature-sensing element to receive the indications of temperature from the first temperature-sensing element and to set power dissipated in the first heating element based on the indications of temperature received from the first temperature-sensing element so as to drive the first optical wavelength response to the first predetermined wavelength.

The second optical component has a second optical wavelength response that is a function of temperature of the second optical component, wherein the second optical wavelength response is substantially equal to a second predetermined wavelength at a second effective temperature of the second optical component. The second heating element is disposed proximate to the second optical component and is capable of inducing temperature elevation of the second optical component.

Component placement and other design selections of the invention are such that indications of temperature generated by the first temperature-sensing element during stable thermal state vary as a first substantially linear function of the power dissipated in the first heating element, the first substantially linear function being characterized by a first thermal constant that is the rate of change in the indications of temperature generated by the first temperature-sensing element with the power dissipated in the first heating element. The effective temperature of the first optical component during stable thermal state varies as a second substantially linear function of the power dissipated in the first heating element, the second substantially linear function being characterized by a second thermal constant that is the rate of change in the effective temperature of the first optical component with the power dissipated in the first heating element. The effective temperature of the second optical component during stable thermal state varies as a third substantially linear function of the power dissipated in the second heating element, wherein the third substantially linear function is characterized by a third thermal constant that is the rate of change in the effective temperature of the second optical component with the power dissipated in the second heating element.

In operation, the temperature controller can be used to estimate global temperature of the first optical component during a first period based at least in part on (i) one or more temperature indications received from the first temperature-sensing element, (ii) the power dissipated by the first heating element, and (iii) the first thermal constant. The temperature controller then can be used to determine a first set-point to which the temperature controller drives temperature indications generated by the first temperature-sensing element during a second period that follows the first period. The first set-point can be determined as follows:

The temperature controller (1) computes a first difference between the first effective temperature and the estimate of the global temperature, (2) computes a ratio of the first thermal constant to the second thermal constant, (3) computes a first product of the first difference and the ratio, and (4) adds the first product to the estimate of the global temperature to obtain the first set-point.

The temperature controller also can be used to determine a second set-point to which the temperature controller sets the power dissipated in the second heating element. The second set-point can be determined as follows:

The temperature controller (1) computes a second product of the second thermal constant and the power dissipated in the first heating element, (2) computes a second difference by subtracting the second effective temperature from the second effective temperature, (3) computes a sum by adding the second product to the second difference, and (4) divides the sum by the third thermal constant to obtain the second set-point. These and other features and aspects of the present invention will be better understood with reference to the following description and appended claims.

BRIEF DESCRIPTION OF THE FIGURES

Figure 1 illustrates an arrayed waveguide grating;
Figure 2A is a top view of a temperature controlled arrayed waveguide grating, in accordance with the present invention;

Figure 2B is a cross-sectional view of a temperature controlled arrayed waveguide grating of Figure 2A, with the cross-section taken along the line A-A';

Figure 3 is a top view of an arrayed waveguide grating having an integrated patterned heater with elements covering multiple waveguides, in accordance with the present invention;

Figure 4 is a high-level, simplified schematic block diagram of a temperature control system for driving a heater of an arrayed waveguide grating, in accordance with the present invention;

Figure 5 is a top view of an arrayed waveguide grating with a localized temperature sensor, in accordance with the present invention;

Figures 6A and 6B illustrate selected steps of an iterative process for temperature-stabilizing and arrayed waveguide grating, in accordance with the present invention;

Figure 7 is a high-level, simplified schematic block diagram of a combination of two arrayed waveguide gratings, each covered with a patterned heater and having a temperature sensor; and

Figure 8 is a high-level, simplified schematic block diagram of a combination of two arrayed waveguide gratings, each covered with a patterned heater, sharing a single temperature sensor.

DETAILED DESCRIPTION

Reference will now be made in detail to several embodiments of the invention that are illustrated in the accompanying drawings. Wherever possible, same or similar reference numerals are used in the drawings and the description to refer to the same or like parts. The drawings are in simplified form and are not to precise scale. For purposes of convenience and clarity only, directional terms, such as top, bottom, left, right, up, down, over, above, below, beneath, rear, and front may be used with respect to the accompanying drawings. These and similar directional terms should not be construed to limit the scope of the invention in any manner. In addition, the terms arrayed waveguide grating, grating, and AWG are used interchangeably, unless the difference is noted or made otherwise clear from the context. AWG and equivalent terms are also used to refer  both to the physical waveguide array and to the optical filter device based on such an array.

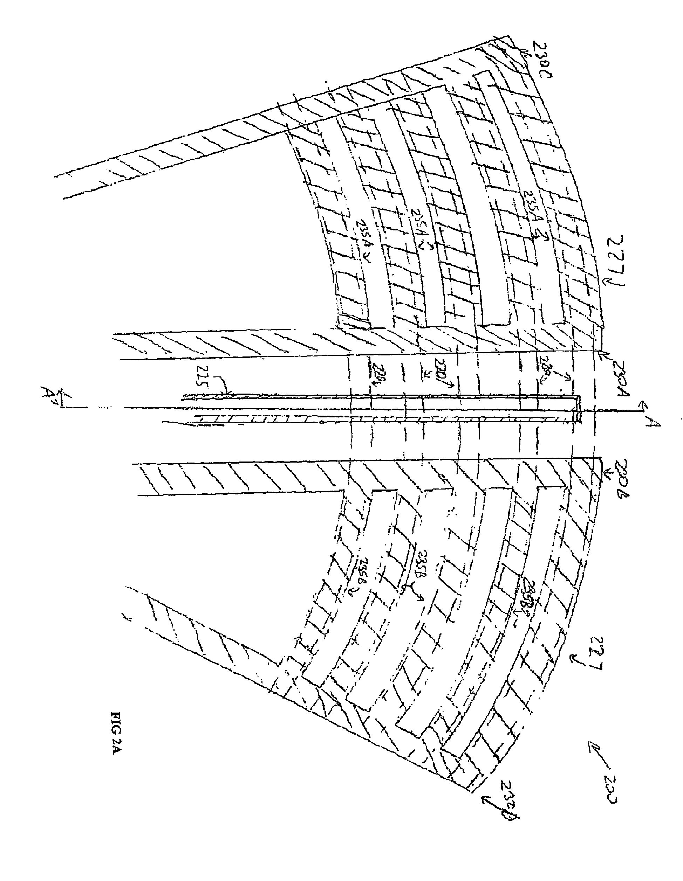

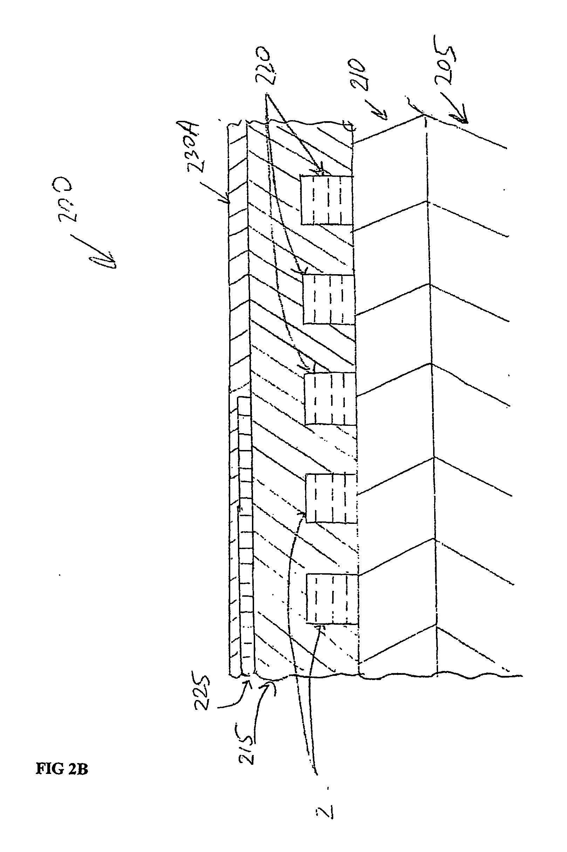

Referring more particularly to the drawings, Figures 2A and 2B illustrate, respectively, a top view and a cross-sectional view (along the line A-A') of an exemplary temperature controlled arrayed waveguide grating 200 in accordance with the present invention. The grating 200 can be built on a planar substrate 205, which can be made from silicon in this particular embodiment. A lower cladding layer 210 can be deposited on the substrate 205, and a plurality of waveguides 220 can be formed on the lower cladding layer 210. An upper cladding layer 215 can be formed on the lower cladding layer 210 and on the waveguides 220, so that the two cladding layers 210 and 215 surround the waveguides 220. The cladding layers 210 and 215 can be made of silica, while the waveguides 220 can be made of doped silica. The refractive index of the material of the waveguides 220 can be higher than that of the materials of the cladding layers 210 and 215, so that light can travel through the waveguides 220 in a direction perpendicular to the plane of the depicted cross-section. As can be seen from Figure 2A, the waveguides 220 can be curvilinear, thus providing different lengths and phase shifts between their respective terminations.

An integrated patterned heater 227 can be wedge-shaped, though other shapes can be also used. It includes buses 230A-D, and heater elements 235A and 235B. In the illustrated embodiment, each heater element 235 spans between a pair of buses 230 above one of the waveguides 220, and can be designed to dissipate the same power per unit length. The buses 230 can be thicker than the heater elements 235 to provide a relatively constant operating voltage to each of the heater elements 235. Thus, the heat generated per unit length of the portions of the waveguides 220 that are covered by the heater elements 235 can be also substantially the same. Consequently, the resulting tilting of the light waves due to operation of the heater 227 takes place with relatively little distortion caused by the operation of the heater 227.

The response time of the refractive index of the waveguides 220 to a change in the electrical power applied by the heater 227 can be greater than one millisecond (although response times of less than 1 millisecond are also possible). This enables the heater 227 to be operated not only by direct current (DC), but also by alternating current (AC), or pulse-width modulated (PWM) electrical signals, as long as the AC or PWM signals have appropriately high frequencies. In some embodiments, the frequencies can be above a threshold determined by the inverse of the response time. In other, more specific embodiments, the frequencies can be above about 1 KHz.

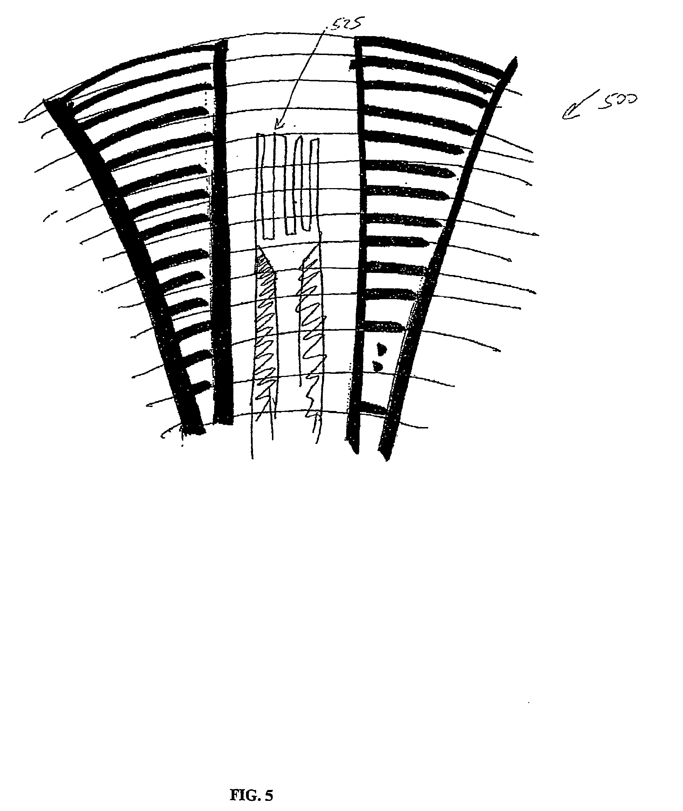

Reference numeral 225 designates an exemplary temperature sensor for monitoring the temperature of the grating 200. In one embodiment, it can be made from the same material as the heater 227 and deposited on the upper cladding layer 215 and shaped together with the heater buses 230 and the heater elements 235. The material used for the temperature sensor 225 has a positive resistance temperature coefficient and exhibits substantially linear behavior over the spectrum of temperatures of interest, e.g., in the range(s) of about 30 to about 120 degrees Celsius. In some variants of the grating 200, platinum, nickel, and tungsten are the materials used for constructing the sensor 225. As illustrated in Figure 2A, the specific pattern of the temperature sensor 225 extends along a substantial portion of the buses 230A and 230B, providing some averaging of the temperatures along its location. Another exemplary temperature sensor design is illustrated in Figure 5, where a temperature sensor 525 provides a more localized reading of the temperatures of a grating 500.

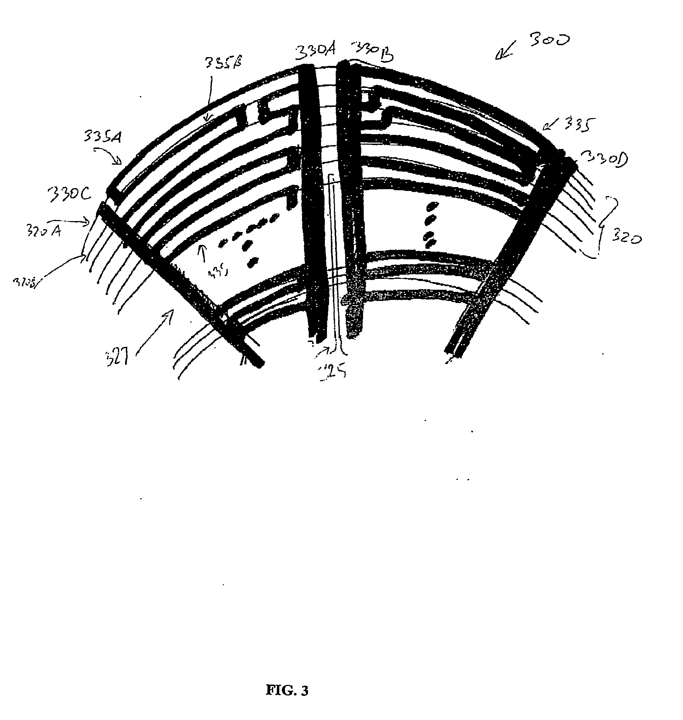

Figure 3 illustrates a top view of an exemplary arrayed waveguide grating 300 in accordance with the present invention. As can be seen from this Figure, heater elements 335 of a patterned heater 327 zigzag between each pair of buses 330. The length of each heater element 335 can be substantially the same, and the resistance of each heater element 335 per unit length can be also substantially constant. It follows that each element 335 can dissipate substantially the same power per unit length. The heater elements 335 zigzag to cover a different number of waveguides 320, because the waveguides 320 are longer towards the top of Figure 3 and shorter towards the bottom of Figure 3. Moreover, different portions of one of the waveguides 320 can be covered by different heater elements 335. See, for example, heater elements 335A and 335B, each covering portions of both waveguides 320A and 320B.

The processes for fabricating arrayed waveguide structures on planar lightwave circuits are generally known to those skilled in the art and, accordingly, there is no need to describe them in detail. For completeness, a brief description follows.

Referring again to Figures 2A and 2B, the lower cladding layer 210 can be grown or deposited on the substrate 205 using known techniques, such as thermal oxidation, chemical-vapor deposition (CVD), flame hydrolysis deposition (FHD), and laser reactive deposition (LRD). A doped silica layer can be deposited on the lower cladding layer 210, also using CVD, FHD, or LRD. The doped silicon layer has a refractive index higher than the refractive index of the lower cladding layer 210. Photolithographic techniques can be used to transfer onto the doped silicon layer a photoresist mask defining the curvilinear waveguides 220, and the waveguides 220 can be formed by reactive ion etching of the areas of the doped silica layer exposed through the mask. Next, the photoresist mask can be removed, and the upper cladding layer 215 can be deposited on the waveguides 220 and on the lower cladding layer 210, using CVD, FHD, or LRD. The upper cladding layer 215 may be made of silica or doped silica, with a refractive index that is lower than the refractive index of the waveguides 220. In one specific embodiment, the refractive index of the upper cladding layer 215 substantially matches the refractive index of the lower cladding layer 210, and has a thickness of between about 5 and about 20 micrometers above the upper surfaces of the waveguides 220.

A thin-film conductive layer can be formed on the upper cladding layer 215, using CVD, LRD, FHD, spin-on coating, evaporation, or sputtering techniques, for example. The conductive layer can be patterned into the integrated heater 227 and the temperature sensor 225, using another photoresist mask and an etching process. In some variants of the grating 200, the entire device can be then coated with a protective layer, which can be made, for instance, of silicon dioxide or silicon oxynitride deposited by CVD or LRD or FHD.

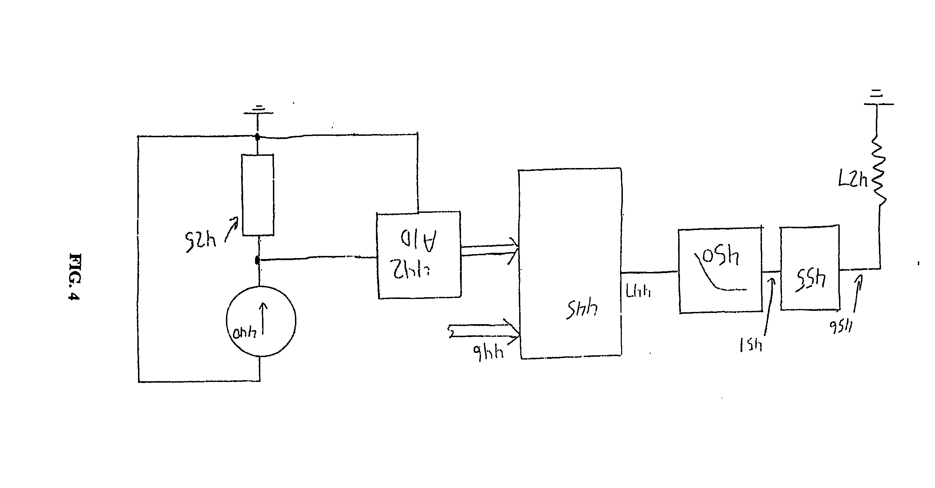

Figure 4 illustrates a high-level schematic block diagram of an exemplary temperature control system 400 for driving a heater of an arrayed waveguide grating, in accordance with the present invention. Numerals 427 and 425 refer to a heater and a temperature sensor of the grating, respectively. A temperature-compensated current source 440 can drive an RTD (resistance temperature device) sensor 425. Various thermistors, diodes, and thermocouples can also be used as temperature sensors. Note also that the current source 440 can be replaced by a current sink, without affecting principles of operation of the system 400.

The voltage developed across the temperature sensor 425 can be input into a temperature reader 442, such as an analog-to-digital (A/D) converter illustrated in Figure 4. A comparator 445 can compare the reading received from the temperature reader 442 to a set-point voltage received from an input 446, and can generate a difference signal at an output 447. The difference signal then can go through a filtering mechanism 450 and can control a heater driver circuit 455. In the illustrated embodiment, the heater driver circuit 455 can be a pulse-width modulator, while the filtering mechanism 450 can be a low-pass time-averaging filter.

The comparator 445 and the filter mechanism 450 can be implemented in program code executed by a microcontroller. The microcontroller periodically can initiate operation of the A/D converter 442 (which can be part of the same microcontroller), and can read the output generated by the A/D converter 442. The microcontroller then can compare the reading to the set-point temperature signal at the input 446, can calculate the difference between the two signals, and can average the difference over a predetermined time period to produce a heater control signal at an output 451.

In some variants of the exemplary temperature control system 400, the averaging period can be of the order of the thermal time constant of the system 400, i.e., the time constant that describes propagation of a change in heater output to a change in the wavelength response of the optical filter. In more specific variants of the temperature control system 400, the averaging period can be between about 1.5 and 5 times the system's thermal time constant.

The output 451 of the filtering mechanism 450 controls the pulse-width of the signal at an output 456 of the heater driver circuit 455. The polarity of the comparator 445 can be such that the width of the pulses output by the circuit 455 increases when the comparator 445 detects that the temperature corresponding to the signal at its input 446 is higher than the temperature detected by the sensor 425. In this way, varying the set-point voltage varies the temperature of the temperature sensor 425 in a one-to-one correspondence.

There are many other ways to implement a temperature controller for the arrayed waveguide gratings in accordance with the present invention, including both analog and digital controller implementations. Off-the-shelf temperature controllers can also be procured from a number of sources, including temperature controllers available from Omega Engineering, Inc., 1 Omega Drive, Stamford, CT, www.omega.com, 1-800-872-9436.

Turning now to the method for tuning and temperature-stabilizing an arrayed waveguide grating, for example, grating 200 of Figure 2, the concept of "effective temperature" or $T_\lambda$ is defined. From the theory of operation of arrayed waveguide gratings presented above in this document, it is clear that a grating's center wavelength $\lambda_c$ is a function of the grating's uniform temperature, t. This functional dependence is hereby designated as $\lambda_c(t)$. When the temperature of the grating is not uniform throughout the grating, some phase error and distortion of the grating's passband may result, but an identifiable center wavelength $\lambda_c = \lambda_1$ will likely persist. The effective temperature $T_\lambda$ of the grating in this thermal state is defined by reference to the same grating, but uniformly heated: $\lambda_c(T_\lambda) = \lambda_1$. In other words, the effective temperature $T_\lambda$ of a non-uniformly heated grating having a center wavelength $\lambda_1$ is equal to the uniform temperature of the same grating having the same center wavelength $\lambda_1$.

Also defined are the concepts of the sensor temperature $T_r$ and global or environment temperature $T_e$, which is the temperature that affects the arrayed waveguide grating as a whole. For a grating covered with a patterned integrated heater, the temperature $T_r$ of the sensor proximal to the heater is expected to be higher than the environment temperature $T_e$, because the patterned heater covers a portion of the grating and heat will flow from the heater to the regions of the chip that are remote from the heater.

Empirical findings and finite element thermal and optical analyses both lead to two useful results:

$$T_r = T_e + (\frac{dT_r}{dW}) * W , \text{ and} \tag{1}$$

$$T_\lambda = T_e + (\frac{dT_\lambda}{dW}) * W . \tag{2}$$

In equations (1) and (2), W is the power dissipated in the patterned heater; $(\frac{dT_r}{dW})$ is a constant that represents the sensitivity of $T_r$ to power of the patterned heater; and $(\frac{dT_\lambda}{dW})$ is a constant that represents the sensitivity of the effective temperature to power of the patterned heater. Equation (1) is ultimately an expression of constant thermal resistance, *i.e.,* of the linear relationship between temperature elevation and the power dissipated in the heater. The temperature difference between the grating and the environment (*Te*) is therefore the product of a thermal constant and the total power flowing from the grating's heater to the environment (*W*). By determining the temperature at an intermediate point ($T_r$) and knowing the total heat flow (*W*) and correlation to the thermal constant $(\frac{dT_r}{dW})$ one can compute both the temperature of the environment ($T_e$) and the temperature under the grating. Equation (2) is simply an expression of the native thermal dependence of the optical filter translated to the effective temperature ($T_\lambda$) induced by the heater. $(\frac{dT_\lambda}{dW})$ is expected to be larger than $(\frac{dT_r}{dW})$, because the patterned heater is designed to tilt the wavefront in the grating more efficiently than a uniform heater.

Note that it is possible to design an optical chip wherein the accuracy of equations (1) and (2) will degrade, such as when the sensor measuring $T_r$ is too remote from the heat flow. In some embodiments in accordance with the invention, optical and thermal designs can be such that the accuracy of equations (1) and (2) is within prescribed limits adequate for the particular application at hand. For example, the designs may be required not to deviate from equations (1) and (2) by more than about 1 degree Celsius over the entire environmental temperature range. Confirmation can be performed empirically or through optical and thermal modeling.

Each of the above two equations has three variables: $T_r$, $T_e$, and *W* in equation (1); and $T_\lambda$, $T_e$, and *W* in equation (2). The power dissipated in the heater, W, can be measured (or set) directly by monitoring (or establishing) the voltage and current applied by the heater driver. Both $T_r$ and $T_e$ can be estimated or measured by temperature

sensors. In fact, $T_r$ is the temperature reading of the temperature sensor 225. Given $T_r$ and $W$, we can calculate $T_e$ from equation (1): $T_e = T_r - (\frac{dT_r}{dW}) * W$. Therefore, $T_e$ need not be measured. Once $T_e$ is known, $T_\lambda$ can be calculated directly from equation (2). Combining these two steps into one, an equation can be obtained for calculating $T_\lambda$ from $T_r$:

$$T_\lambda = T_r - (\frac{dT_r}{dW}) * W + (\frac{dT_\lambda}{dW}) * W \equiv T_r + \left( (\frac{dT_\lambda}{dW}) - (\frac{dT_r}{dW}) \right) * W \equiv T_r + B * W . \tag{3}$$

In implementing temperature stabilization in accordance with this equation, $W$ can be measured or set; a target for $T_r$, which will be referred to as the set-point temperature and labeled $T_s$, can also be selected. In this embodiment $T_s$ does not represent the uniform grating temperature, but it is directly analogous to a set-point temperature to be maintained by a temperature controller, at least for a good design under expected environmental conditions. The constants $(\frac{dT_\lambda}{dW})$ and $(\frac{dT_r}{dW})$ can be determined empirically or accurately estimated, for example, by using finite-element thermal and optical analyses. Thus, equation (3) can be used to maintain the design effective temperature of the grating (and therefore the design center wavelength of the grating), using temperature readings $T_r$ provided by a single sensor, and knowledge of the power being applied to the heater. A dynamic negative-feedback process can be used to stabilize the grating at $T_\lambda$(design), the effective temperature corresponding to the designed center wavelength. One such process is described below. Note that in some embodiments the feedback loop can be digital; in other embodiments, the loop and the feedback process can be analog, or a suitable mixture of digital and analog.

First, $W$ will be expressed in terms of the other constants and parameters. Equation (1) gives this relationship:

$$W = \frac{T_r - T_e}{\left( \frac{dT_r}{dW} \right)} . \tag{4}$$

This result can be substituted into equation (2):

$$T_\lambda = T_e + (T_r - T_e) * \left( \frac{\frac{dT_\lambda}{dW}}{\frac{dT_r}{dW}} \right) . \tag{5}$$

Similarly, $T_r$ can be expressed in terms of $T_\lambda$ and $T_c$:

$$T_r = T_e + (T_\lambda - T_e) * \left( \frac{\frac{dT_r}{dW}}{\frac{dT_\lambda}{dW}} \right) . \tag{6}$$

In the beginning of the stabilization-control process, the initial temperature sensor measurement $T_r(1)$ can be used as an estimate of initial effective temperature $T_\lambda(1)$ and initial global temperature $T_e(1)$, which should yield accurate estimates before the integrated heater is powered, at least as an initial point of the iterative process. Then the initial set-point temperature $T_s(1)$ for the temperature controller can be calculated from modified equation (6):

$$T_s(1) = T_e(1) + (T_\lambda(design) - T_e(1)) * \left( \frac{\frac{dT_r}{dW}}{\frac{dT_\lambda}{dW}} \right),$$ (7)

where $T_\lambda(design)$ stands for the effective temperature needed to achieve the design center wavelength of the grating. The temperature controller is set to the calculated set-point temperature $T_s(1)$, applying power to the heater. This raises the temperature at the sensor ($T_r$) and, typically by a lesser amount, the global temperature ($T_e$). Next, a subsequent temperature reading $T_r(2)$ is obtained from the temperature sensor, and $W(2)$ is measured and, optionally, averaged over some time period that may be longer than the small-signal thermal response time. The global temperature at that time ($T_e(2)$) is calculated from modified equation (1):

$$T_e(2) = T_r(2) - (\frac{dT_r}{dW}) * W(2).$$ (8)

The feedback loop directs the controller to increase power applied to the heater when $T_r$ is lower than $T_s$, and to decrease the power when $T_r$ is higher than $T_s$, thereby compelling $T_r$ to move towards $T_s$. In determining how much to increase or decrease the power, the controller may consider not only whether the sensor temperature is simply above or below the set-point temperature, but also the size of the difference between the temperatures ('proportional'), how fast the temperature difference is changing ('derivative'), recent temperature history ('integral'), and other factors, such as acceleration and bandwidth. The techniques for utilizing these factors in determining the amount of power to be applied to the heater have been described in the literature on PID (proportional-integral-derivative) temperature controllers.

The effective temperature of the grating ($T_\lambda(2)$) is available from equation (2):

$$T_\lambda(2) = T_e(2) + (\frac{dT_\lambda}{dW}) * W(2).$$ (9)

Next, the second set-point temperature $T_s(2)$ for the integrated heater can be calculated from the modified equation (6):

$$T_s(2) = T_e(2) + (T_\lambda(design) - T_e(2)) * \left( \frac{\frac{dT_r}{dW}}{\frac{dT_\lambda}{dW}} \right).$$ (10)

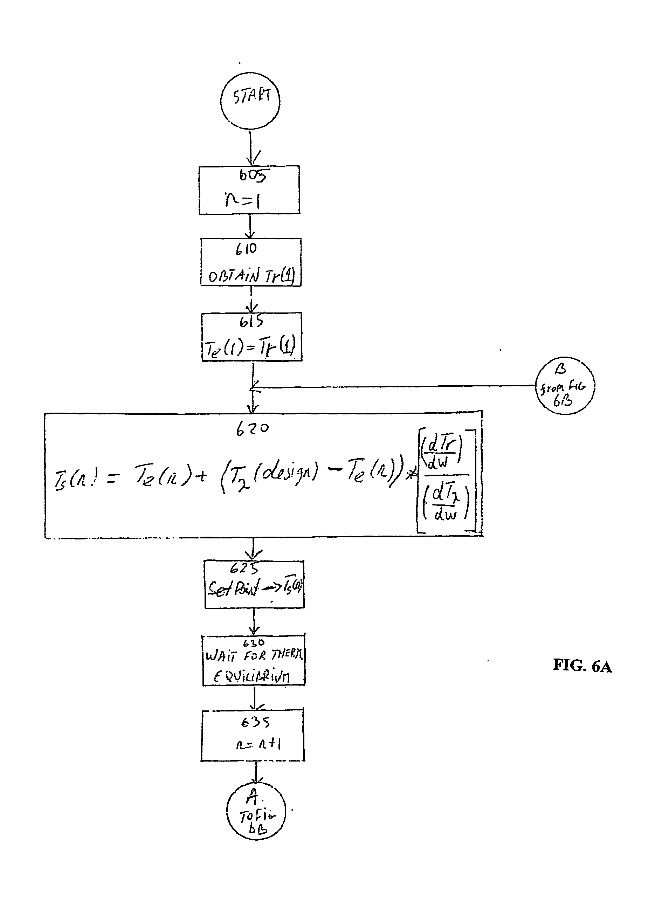

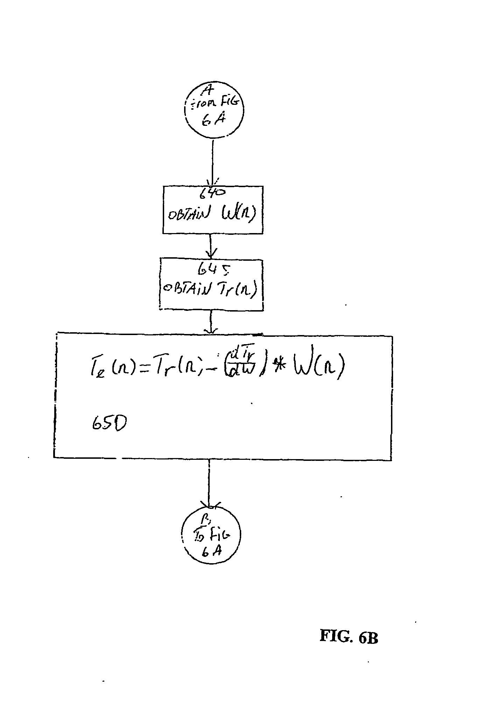

The steps of this iterative process, illustrated in Figures 6A and 6B, can be repeated continually to bring the grating to the design effective temperature, and maintain it there. During stable operation, $T_r$ and $T_s$ should be about the same. The difference between the calculated $T_\lambda$ and the design $T_\lambda$ is a measure of performance of the temperature stabilization scheme employed. Although the stabilization techniques have been described as discrete digital operations, the computations and responses can be linear and continuous. Therefore, a person skilled in the art would understand that equivalent operations can be performed by analog processing in either discrete or continuous fashion.

One additional observation is in order at this point. The operation of the integrated patterned heater need not be, and typically is not, entirely localized to its footprint; it affects all portions of the grating to some extent. The non-localized effect of the heater, however, is conceptually similar to many other environmental factors affecting $T_e$. For this reason, the non-localized effect of the heater has been ignored in the course of the present discussion.

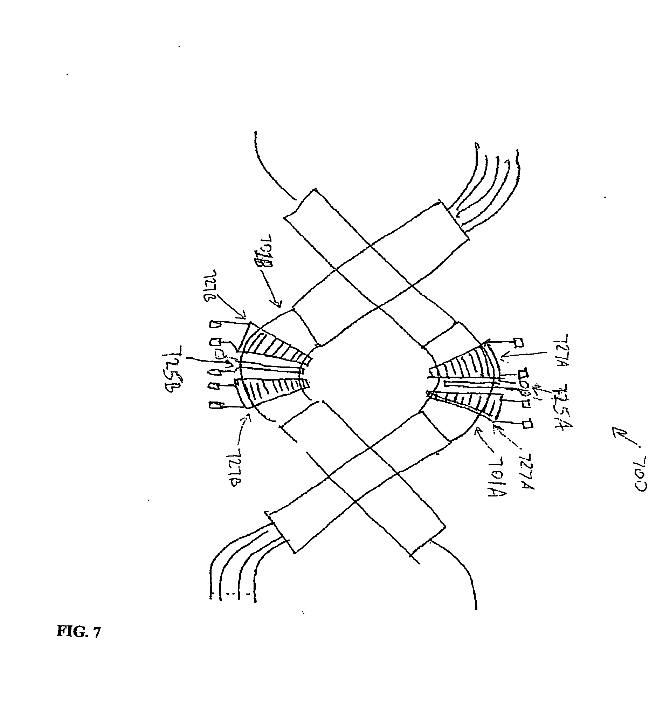

With the above analysis in mind, the case of multiple gratings (or other optical components, or suitable configurations of multiple optical components) fabricated on the same substrate is now analyzed. Figure 7 illustrates an exemplary combination 700 of two arrayed waveguide gratings, 701A and 701B, each covered with an efficient patterned heater and having a temperature sensor. Both gratings are fabricated on the same substrate.

The grating 701A can be associated with a heater 727A and a temperature sensor 725A; the grating 701B can be associated with a heater 727B and a temperature sensor 725B. As can be illustrated in Figure 7, each temperature sensor can be disposed so as to respond substantially to the local temperature of its associated grating. Cross heating effects of the heaters on the opposite gratings/sensors (e.g., heating of the grating 701A by the heater 727B), can be present, but once again, these secondary effects are subsumed within other factors affecting the global temperatures of the two gratings. Thus, each grating can be stabilized separately (i.e., individually), using temperature controllers similar to the temperature controller 400 of Figure 4, and iterative processes similar to the process 600 of Figures 6A and 6B.

The cross heating effects have one beneficial result: they reduce the total power dissipated by the two heaters 727. In practice, the combined power dissipated by the two heaters 727 can be considerably less than twice the power of a single grating/heater combination. Indeed, the combined power of the two heaters can be only slightly higher than the power dissipated in the single grating/heater combination.

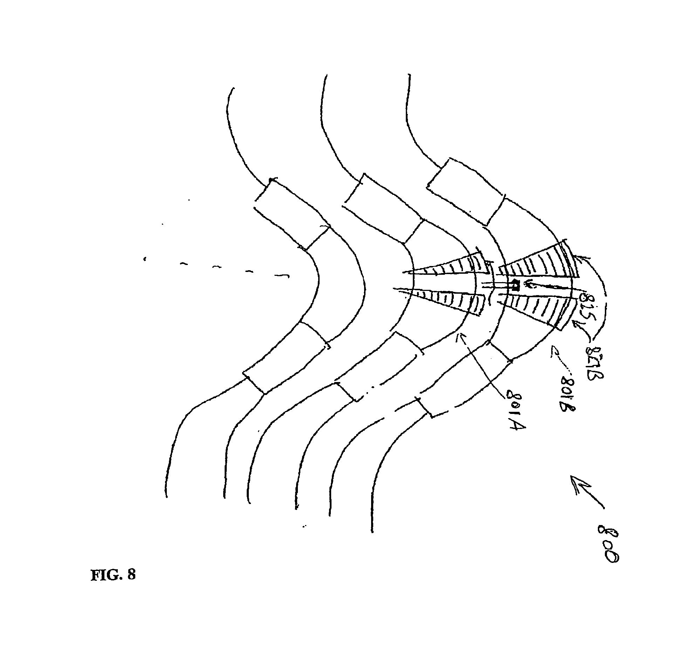

Figure 8 illustrates a combination 800 of two arrayed waveguide gratings 801A and 801B fabricated on one substrate, with two associated heaters 827A and 827B. The combination 800 is similar to the combination 700, but employs a single temperature sensor 825 to temperature-stabilize both gratings 801A and 801B. The temperature sensor 825 is disposed proximate the grating 801B, so that its readings are more indicative of the temperature of the grating 801B than of the temperature of the grating 801A. The grating 801B will be referred to as the primary grating, and the grating 801A will be referred to as the secondary or dependent grating.

The method for temperature-stabilizing a multi-grating, single temperature sensor chip (substrate) is similar to the dual sensor case, with one difference being that temperature control of one of the gratings is dependent upon the control of the other grating, hence the control of the dependent grating becomes an open-loop process.

Before proceeding, the following variables, parameters, and constants are defined:

1. $T_\lambda^A$ is the effective temperature of the grating 801A;

2. $T_\lambda^B$ is the effective temperature of the grating 801B;
3. $W^A$ is the power provided to and dissipated by the heater 827A;
4. $W^B$ is the power provided to and dissipated by the heater 827B;

5. $\dfrac{dT_\lambda^A}{dW^A}$ is the sensitivity of $T_\lambda^A$ to $W^A$;

6. $\dfrac{dT_\lambda^B}{dW^B}$ is the sensitivity of $T_\lambda^B$ to $W^B$;

7. $T_r$ is the temperature indication of the temperature sensor (as in the single grating case treated above);

8. $\dfrac{dT_r}{dW^A}$ is the sensitivity of the temperature $T_r$ of the temperature sensor to the power $W^A$; and

9. $\dfrac{dT_r}{dW^B}$ is the sensitivity of the temperature $T_r$ of the temperature sensor to the power $W^B$.

Empirical results and finite element thermal and optical analyses lead to a useful relationship among several factors:

$$T_\lambda^A - T_\lambda^B = \left(\frac{dT_\lambda^A}{dW^A}\right) * W^A - \left(\frac{dT_\lambda^B}{dW^B}\right) * W^B , \qquad (11)$$

where the constants $\dfrac{dT_\lambda^A}{dW^A}$, and $\dfrac{dT_\lambda^B}{dW^B}$ can be estimated empirically, or by using finite element thermal and optical analyses. Having selected the grating 801A to be the dependent grating, equation (11) can be now rearranged to express $W^A$ as a function of $W^B$ and of the static parameters, and get the following dependence:

$$W^A = \frac{T_\lambda^A - T_\lambda^B + (\frac{dT_\lambda^B}{dW^B}) * W^B}{(\frac{dT_\lambda^A}{dW^A})} . \qquad (12)$$

In this embodiment, the drive power $W^B$ used to stabilize the primary grating can be controlled according to the methods described previously for the single grating case, lumping the effect of the heater 827A on the temperature of the primary grating 801B together with other environmental effects. The drive power $W^B$ can be thus available, because it is either set directly by the temperature controller or can be measured, for example, using a current sensor that indicates the current through the primary grating 801B. All other terms of equation (12) that are necessary to determine $W^A$ are also available: (1) the values used for $T_\lambda^A$ and $T_\lambda^B$ are the effective temperatures of the respective gratings needed to achieve each design center wavelength, which are hereby designated by $T_\lambda^A(design)$ and $T_\lambda^E(design)$; and (2) the response coefficients $\dfrac{dT_\lambda^A}{dW^A}$, and $\dfrac{dT_\lambda^B}{dW^B}$ are constants of the device determined empirically or through modeling (optical and thermal) for the intended operation. For each operating point of $W^B$, the appropriate power to provide to and dissipate in the heater 827A of the dependent grating 801A can be determined using:

$$W^A = \frac{T_\lambda^A(design) - T_\lambda^B(design) + (\frac{dT_\lambda^B}{dW^B}) * W^B}{(\frac{dT_\lambda^A}{dW^A})} . \qquad (14)$$

This document describes the inventive optical devices and methods for thermally tuning and stabilizing them in considerable detail for illustration purposes only. Neither the specific embodiments of the invention as a whole, nor those of its features limit the general principles of the invention. In particular, the invention is not limited to arrayed waveguide gratings, but includes other optical devices. The invention is also not limited to particular temperature controllers, heaters, temperature sensors, and other components described, but extends to all applications of the principles underlying the invention. The specific features described herein may be used in some embodiments, but not in others, without departure from the spirit and scope of the invention as set forth. Furthermore, the specific iterative process described to stabilize the wavelength response of the device need not limit the invention. Other iterative processes can be used to tune and stabilize optical components at their design center wavelengths. Different physical arrangements of components and different step sequences also fall within the intended scope of the invention, and embodiments with two gratings are intended to illustrate principles equally applicable to embodiments with three and more gratings. It should also be noted that in the description and claims relating to the apparatus embodiments of the invention, "couple," "connect," and similar words with their inflectional morphemes do not necessarily import an immediate or direct connection, but include connections through mediate elements within their meanings. In this document, "of the order of" and similar expressions used with reference to a parameter or quantity signify a variation of about one order of magnitude (a factor of ten) in either direction. Similarly, as utilized herein, the term "in the range(s)" or "between" comprises the range defined by the values listed after the term "in the range(s)" or "between", as well as any and all subranges contained within such range, where each such subrange is defined as having as a first endpoint any value in such range, and as a second endpoint any value in such range that is greater than the first endpoint and that is in such range. Many additional modifications are intended in the foregoing disclosure, and it will be appreciated by those of ordinary skill in the art that in some instances some features of the invention will be employed in the absence of a corresponding use of other features. The illustrative examples therefore do not define the metes and bounds of the invention and the legal protection afforded the invention, which function is served by the claims and their equivalents.

**Claims**

1. An integrated optical device, comprising:

a first optical component having a first optical wavelength response that is a function of temperature of the first optical component;

a first heating element disposed in proximity to the first optical component to be capable of inducing temperature elevation of the first optical component;

a temperature-sensing element adapted to generate indications of temperature at a first location of the temperature-sensing element, wherein temperature elevations induced at the first location by the first heating element exceed corresponding temperature elevations induced by the first heating element in a first region remote from the first location of the optical device;

a temperature controller coupled to the first heating element and to the temperature-sensing element to receive the indications of temperature from the temperature sensing element and to set power dissipated in the first heating element based on the indications of temperature received from the temperature-sensing element so as to drive the first optical wavelength response to a first predetermined wavelength;

a second optical component having a second optical wavelength response that is a function of temperature of the second optical component; and

a second heating element disposed in proximity to the second optical component to be capable of inducing temperature elevation of the second optical component and wherein indications of temperature generated by the temperature-sensing element during stable thermal state of the optical device vary as a first substantially linear function of the power dissipated in the first heating element, the first substantially linear function being **characterized by** a first thermal constant that is the rate of change in the indications of temperature generated by the temperature-sensing element with the power dissipated in the first heating element;

an effective temperature of the first optical component during stable thermal state that varies as a second substantially linear function of the power dissipated in the first heating element, the second substantially linear function being **characterized by** a second thermal constant that is the rate of change in the effective temperature of the first optical component with the power dissipated in the first heating element;

an effective temperature of the second optical component during stable thermal state that varies as a third substantially linear function of the power dissipated in the second heating element, the third substantially linear function being **characterized by** a third thermal constant that is the rate of change in the effective temperature of the second optical component with the power dissipated in the second heating element;

the temperature controller is adapted to estimate a global temperature ($T_e$) of the first optical component during a first period based at least in part on (i) one or more temperature indications received from the temperature-sensing element during the first period, (ii) the power dissipated by the first heating element during the first period, and (iii) the first thermal constant, wherein the global temperature is the temperature that affects the arrayed waveguide grating as a whole;

the first optical wavelength response is substantially equal to the first predetermined wavelength at the effective temperature of the first optical component;

the second optical wavelength response is substantially equal to the second predetermined wavelength at the effective temperature of the second optical component;

the temperature controller is adapted to determine a set-point to which the temperature controller, by setting the power dissipated in the first heating element, drives temperature indications of the temperature-sensing element during a second period that follows the first period by:

computing a first difference between a design effective temperature of the first component and the estimate of the global temperature,

computing a ratio of the first thermal constant to the second thermal constant,

computing a first product of the first difference and the ratio, and

adding the first product to the estimate of the global temperature to obtain the first set-point; and

the temperature controller is adapted to determine a second set-point to which the temperature controller sets the power dissipated in the second heating element by:

computing a second product of the second thermal constant and the power dissipated in the first heating element,
computing a second difference between the design effective temperature of the second component and the design effective temperature of the first component,
computing a sum by adding the second product to the second difference,

and
dividing the sum by the third thermal constant to obtain the second set-point, wherein the temperature-sensing element is a single temperature sensor.

2. An integrated optical device according to claim 1, wherein the temperature controller comprises a proportional-integral-derivative temperature controller.

3. An integrated optical device according to claim 1, wherein the temperature sensing element comprises a resistance temperature device.

4. An integrated optical device according to claim 1, wherein the temperature controller performs an iterative adjustment of the power dissipated in the first heating element to drive the optical wavelength response to the predetermined wavelength.

5. An integrated optical device according to claim 2, wherein: duration of the first period is of the order of a thermal time constant characterizing propagation of changes in the power dissipated in the first heating element to changes in the optical wavelength response.

6. An integrated optical device according to claim 1, wherein at least one of the first and second heating elements comprises a patterned thin conductive film disposed on at least one of the arrayed waveguide gratings.

7. A method for temperature-stabilizing a first and a second optical component of an optical device with a temperature-sensing element, wherein the temperature-sensing element is a single temperature sensor, the first optical component having a first optical wavelength response that is a function of temperature of the first optical component, the first optical wavelength response being equal to a first predetermined wavelength when the first optical component is at an effective temperature, the second optical component having a second optical wavelength response that is a function of temperature of the second optical component, the second optical wavelength response being equal to a second predetermined wavelength when the second optical component is at an effective temperature the method comprising:

receiving indications of temperature from the temperature-sensing element on the optical device; and
regulating first power provided to a first heating element proximate the first optical component so as to drive a temperature of the first optical component to the effective temperature, wherein regulating first power comprises using the indications of temperature in a feedback control loop and;
regulating a second power provided to a second heating element disposed on the optical device proximate the second optical component so as to drive a temperature of the second optical component to the effective temperature, wherein regulating the second power comprises changing the second power according to an amount that is linearly proportional to the first power, said linear proportionality being equal to a first constant plus the product of a second constant and the first power provided to the first heating element.

8. A method according to claim 7, wherein the first optical device comprises an efficient patterned heater disposed on the arrayed waveguide grating.

9. An integrated optical device in accordance with claim 1, wherein the first heating element comprises a first efficient patterned heater, the second heating element comprises a second efficient patterned heater, the first optical component comprises a first arrayed waveguide grating, and the second optical component comprises a second arrayed waveguide grating.

10. An integrated optical device in accordance with claim 1, wherein the first predetermined wavelength is equal to the second predetermined wavelength.

11. An integrated optical device in accordance with claim 6, wherein the temperature-sensing element comprises a second patterned conductive thin film of the first material disposed proximally to the first arrayed waveguide grating.

**12.** The method according to claim 7 wherein said linear proportionality is provided by an equation:

$$W^A = \frac{T\lambda^A(design) - T\lambda^B(design) + \frac{dT_\lambda^B}{dW^B} * W^B}{\frac{dT\lambda^A}{dW^A}}$$

wherein

$W^A$ is the second power,
$W^B$ is the first power,
$T_\lambda^A(design)$ is the effective temperature of the second optical component,
$T_\lambda^B(design)$ is the effective temperature of the first optical component,

$$\frac{dT_\lambda^B}{dW^B}$$

is a thermal constant that is a rate of in a temperature of the first component with respect to the changes in the power dissipated in the first heating element, and

$$\frac{dT\lambda^A}{dW^A}$$

is a thermal constant that is a rate of in a temperature of the second component with respect to the changes in the power dissipated in the second heating element.

**Patentansprüche**

**1.** Integrierte optische Vorrichtung, umfassend:

- eine erste optische Komponente, die ein erstes optisches Wellenlängenverhalten aufweist, das eine Funktion der Temperatur der ersten optischen Komponente ist;
- ein erstes Heizelement, das in der Nähe der ersten optischen Komponente angeordnet ist, um in der Lage zu sein, eine Temperaturerhöhung der ersten optischen Komponente herbeizuführen;
- ein Temperatursensorelement, das geeignet ist, Temperaturangaben an einer ersten Stelle des Temperatursensorelements zu generieren, wobei Temperaturerhöhungen, die an der ersten Stelle durch das erste Heizelement herbeigeführt werden, über entsprechende Temperaturerhöhungen hinausgehen, die von dem ersten Heizelement in einem ersten Bereich, der von der ersten Stelle der optischen Vorrichtung entfernt ist, herbeigeführt werden;
- einen Temperaturregler, der mit dem ersten Heizelement und dem Temperatursensorelement gekoppelt ist, um die Temperaturangaben von dem Temperatursensorelement zu empfangen und um Energie, die in dem ersten Heizelement abgeleitet wird, basierend auf den Temperaturangaben, die von dem Temperatursensorelement empfangen werden, einzustellen, um das erste optische Wellenlängenverhalten auf eine erste vorbestimmte Wellenlänge anzusteuern;
- eine zweite optische Komponente, die ein zweites optisches Wellenlängenverhalten aufweist, das eine Funktion der Temperatur der zweiten optischen Komponente ist; und
- ein zweites Heizelement, das in der Nähe der zweiten optischen Komponente angeordnet ist, um in der Lage zu sein, eine Temperaturerhöhung der zweiten optischen Komponente herbeizuführen, und wobei Temperaturangaben, die von dem Temperatursensorelement während eines stabilen thermischen Zustands der optischen Vorrichtung generiert werden, als eine erste im Wesentlichen lineare Funktion der Energie, die in dem ersten Heizelement abgeleitet wird, variieren, wobei die erste im Wesentlichen lineare Funktion durch eine erste thermische Konstante gekennzeichnet ist, welche die Änderungsrate der Temperaturangaben ist, die von dem Temperatursensorelement mit der Energie, die in dem ersten Heizelement abgeleitet wird, generiert werden;
- wobei eine effektive Temperatur der ersten optischen Komponente während eines stabilen thermischen Zustands als eine zweite im Wesentlichen lineare Funktion der Energie, die in dem ersten Heizelement abgeleitet wird, variiert, wobei die zweite im Wesentlichen lineare Funktion durch eine zweite thermische Konstante gekennzeichnet ist, welche die Änderungsrate der effektiven Temperatur der ersten optischen Komponente mit der Energie, die in dem ersten Heizelement abgeleitet wird, ist;

- wobei eine effektive Temperatur der zweiten optischen Komponente während eines stabilen thermischen Zustands als eine dritte im Wesentlichen lineare Funktion der Energie, die in dem zweiten Heizelement abgeleitet wird, variiert, wobei die dritte im Wesentlichen lineare Funktion durch eine dritte thermische Konstante gekennzeichnet ist, welche die Änderungsrate der effektiven Temperatur der zweiten optischen Komponente mit der Energie, die in dem zweiten Heizelement abgeleitet wird, ist;

- wobei der Temperaturregler geeignet ist, eine globale Temperatur ($T_e$) der ersten optischen Komponente während einer ersten Periode basierend mindestens teilweise auf (i) einer oder mehreren Temperaturangaben, die von dem Temperatursensorelement während der ersten Periode empfangen werden, (ii) der Energie, die von dem ersten Heizelement während der ersten Periode abgeleitet wird, und (iii) der ersten thermischen Konstante zu schätzen, wobei die globale Temperatur die Temperatur ist, die sich auf das Array-Wellenleitergitter insgesamt auswirkt;

- wobei das erste optische Wellenlängenverhalten im Wesentlichen gleich der ersten vorbestimmten Wellenlänge auf der effektiven Temperatur der ersten optischen Komponente ist;

- wobei das zweite optische Wellenlängenverhalten im Wesentlichen gleich der zweiten vorbestimmten Wellenlänge auf der effektiven Temperatur der zweiten optischen Komponente ist;

- wobei der Temperaturregler geeignet ist, einen Sollwert zu bestimmen, auf den der Temperaturregler durch Einstellen der Energie, die in dem ersten Heizelement abgeleitet wird, Temperaturangaben des Temperatursensorelements während einer zweiten Periode, die auf die erste Periode folgt, ansteuert durch:

. Berechnen einer ersten Differenz zwischen einer theoretischen effektiven Temperatur der ersten Komponente und der Schätzung der globalen Temperatur,
. Berechnen eines Verhältnisses der ersten thermischen Konstante zu der zweiten thermischen Konstante,
. Berechnen eines ersten Produkts der ersten Differenz und des Verhältnisses, und
. Addieren des ersten Produkts zu der Schätzung der globalen Temperatur, um den ersten Sollwert zu erzielen; und

- wobei der Temperaturregler geeignet ist, einen zweiten Sollwert zu bestimmen, auf den der Temperaturregler die Energie einstellt, die in dem zweiten Heizelement abgeleitet wird, durch:

. Berechnen eines zweiten Produkts der zweiten thermischen Konstante und der Energie, die in dem ersten Heizelement abgeleitet wird,
. Berechnen einer zweiten Differenz zwischen der theoretischen effektiven Temperatur der zweiten Komponente und der theoretischen effektiven Temperatur der ersten Komponente,
. Berechnen einer Summe durch Addieren des zweiten Produkts zu der zweiten Differenz, und
. Dividieren der Summe durch die dritte thermische Konstante, um den zweiten Sollwert zu erzielen, wobei das Temperatursensorelement ein einziger Temperatursensor ist.

2. Integrierte optische Vorrichtung nach Anspruch 1, wobei der Temperaturregler einen Proportional-Integral-Differenzial-Temperaturregler umfasst.

3. Integrierte optische Vorrichtung nach Anspruch 1, wobei das Temperatursensorelement eine ohmsche Temperaturvorrichtung umfasst.

4. Integrierte optische Vorrichtung nach Anspruch 1, wobei der Temperaturregler eine iterative Anpassung der Energie ausführt, die in dem ersten Heizelement abgeleitet wird, um das optische Wellenlängenverhalten auf die vorbestimmte Wellenlänge anzusteuern.

5. Integrierte optische Vorrichtung nach Anspruch 2, wobei: die Dauer der ersten Periode von der Größenordnung einer thermischen Zeitkonstante ist, welche die Ausbreitung von Änderungen in der Energie, die in dem ersten Heizelement abgeleitet wird, auf Änderungen in dem optischen Wellenlängenverhalten charakterisiert.

6. Integrierte optische Vorrichtung nach Anspruch 1, wobei mindestens eines des ersten und zweiten Heizelements eine strukturierte, dünne, leitfähige Schicht umfasst, die auf mindestens einem der Array-Wellenleitergitter angeordnet ist.

**7.** Verfahren zur Temperaturstabilisierung einer ersten und einer zweiten optischen Komponente einer optischen Vorrichtung mit einem Temperatursensorelement, wobei das Temperatursensorelement ein einziger Temperatursensor ist, wobei die erste optische Komponente ein erstes optisches Wellenlängenverhalten aufweist, das eine Funktion der Temperatur der ersten optischen Komponente ist, wobei das erste optische Wellenlängenverhalten gleich einer ersten vorbestimmten Wellenlänge ist, wenn sich die erste optische Komponente auf einer effektiven Temperatur befindet, wobei die zweite optische Komponente ein zweites optisches Wellenlängenverhalten aufweist, das eine Funktion der Temperatur der zweiten optischen Komponente ist, wobei das zweite optische Wellenlängenverhalten gleich einer zweiten vorbestimmten Wellenlänge ist, wenn sich die zweite optische Komponente auf einer effektiven Temperatur befindet, wobei das Verfahren folgende Schritte umfasst:

- Empfangen von Temperaturangaben von dem Temperatursensorelement an der optischen Vorrichtung; und
- Regulieren erster Energie, die einem ersten Heizelement in der Nähe der ersten optischen Komponente bereitgestellt wird, um eine Temperatur der ersten optischen Komponente auf die effektive Temperatur anzusteuern, wobei das Regulieren erster Energie das Verwenden der Temperaturangaben in einer Rückkopplungsschleife umfasst; und
- Regulieren einer zweiten Energie, die einem zweiten Heizelement, auf der optischen Vorrichtung angeordnet, in der Nähe der zweiten optischen Komponente bereitgestellt wird, um eine Temperatur der zweiten optischen Komponente auf die effektive Temperatur anzusteuern, wobei das Regulieren der zweiten Energie das Ändern der zweiten Energie um einen Betrag umfasst, der zu der ersten Energie linear proportional ist, wobei die lineare Proportionalität gleich einer ersten Konstante plus dem Produkt einer zweiten Konstante und der ersten Energie, die dem ersten Heizelement bereitgestellt wird, ist.

**8.** Verfahren nach Anspruch 7, wobei die erste optische Vorrichtung ein effizientes strukturiertes Heizgerät umfasst, das auf dem Array-Wellenleitergitter angeordnet ist.

**9.** Integrierte optische Vorrichtung nach Anspruch 1, wobei das erste Heizelement ein erstes effizientes strukturiertes Heizgerät umfasst, wobei das zweite Heizelement ein zweites effizientes strukturiertes Heizgerät umfasst, wobei die erste optische Komponente ein erstes Array-Wellenleitergitter umfasst, und wobei die zweite optische Komponente ein zweites Array-Wellenleitergitter umfasst.

**10.** Integrierte optische Vorrichtung nach Anspruch 1, wobei die erste vorbestimmte Wellenlänge gleich der zweiten vorbestimmten Wellenlänge ist.

**11.** Integrierte optische Vorrichtung nach Anspruch 6, wobei das Temperatursensorelement eine zweite strukturierte, leitfähige, dünne Schicht des ersten Materials umfasst, die in der Nähe des ersten Array-Wellenleitergitters angeordnet ist.

**12.** Verfahren nach Anspruch 7, wobei die lineare Proportionalität durch eine Gleichung

$$W^A = \frac{T\lambda^A(design) - T\lambda^B(design) + \frac{dT_\lambda^B}{dW^B} * W^B}{\frac{dT\lambda^A}{dW^A}}$$

bereitgestellt wird, wobei

$W^A$ die zweite Energie ist,
$W^B$ die erste Energie ist,

$\mathrm{T}_\lambda^A$ (*design*) die effektive Temperatur der zweiten optischen Komponente ist,

$\mathrm{T}_\lambda^B$ (*design*) die effektive Temperatur der ersten optischen Komponente ist,

$$\frac{dT_\lambda^B}{dW^B}$$

eine thermische Konstante ist, die eine Änderungsrate einer Temperatur der ersten Komponente im Verhältnis zu den Änderungen der Energie, die in dem ersten Heizelement abgeleitet wird, ist, und

$\dfrac{dT_\lambda^A}{dW^A}$ eine thermische Konstante ist, die eine Änderungsrate einer Temperatur der zweiten Komponente im Verhältnis zu den Änderungen der Energie, die in dem zweiten Heizelement abgeleitet wird, ist.


**Revendications**

1. Dispositif optique intégré, comprenant :

   un premier composant optique présentant une première réponse en longueur d'onde optique qui est une fonction de la température du premier composant optique ;
   un premier élément chauffant appliqué à proximité du premier composant optique pour être susceptible de produire une élévation de température du premier composant optique ;
   un élément capteur de température adapté à générer des indications de température à un premier emplacement de l'élément capteur de température, des élévations de température produites au premier emplacement par le premier élément chauffant excédant des élévations de température correspondantes produites par le premier élément chauffant dans une première région éloignée du premier emplacement du dispositif optique ;
   un régulateur de température couplé au premier élément chauffant et à l'élément capteur de température pour recevoir les indications de température en provenance de l'élément capteur de température et pour fixer la puissance dissipée dans le premier élément chauffant sur la base des indications de température reçues en provenance de l'élément capteur de température de manière à amener la première réponse en longueur d'onde optique vers une première longueur d'onde prédéfinie ;
   un deuxième composant optique présentant une deuxième réponse en longueur d'onde optique qui est une fonction de la température du deuxième composant optique ; et
   un deuxième élément chauffant appliqué à proximité du deuxième composant optique pour être susceptible de produire une élévation de température du deuxième composant optique, des indications de température générées par l'élément capteur de température durant un état thermique stable du dispositif optique variant comme une première fonction sensiblement linéaire de la puissance dissipée dans le premier élément chauffant, la première fonction sensiblement linéaire étant **caractérisée par** une première constante thermique représentant le taux de variation des indications de température générées par l'élément capteur de température par rapport à la puissance dissipée dans le premier élément chauffant ;
   une température effective du premier composant optique durant un état thermique stable variant comme une deuxième fonction sensiblement linéaire de la puissance dissipée dans le premier élément chauffant, la deuxième fonction sensiblement linéaire étant **caractérisée par** une deuxième constante thermique représentant le taux de variation de la température effective du premier composant optique par rapport à la puissance dissipée dans le premier élément chauffant ;
   une température effective du deuxième composant optique durant un état thermique stable variant comme une troisième fonction sensiblement linéaire de la puissance dissipée dans le deuxième élément chauffant, la troisième fonction sensiblement linéaire étant **caractérisée par** une troisième constante thermique représentant le taux de variation de la température effective du deuxième composant optique par rapport à la puissance dissipée dans le deuxième élément chauffant ;
   le régulateur de température est adapté à estimer une température globale ($T_e$) du premier composant optique durant une première période sur la base, en partie au moins, (i) d'une ou de plusieurs indications de température reçues de l'élément capteur de température durant la première période, (ii) de la puissance dissipée par le premier élément chauffant durant la première période, et (iii) de la première constante thermique, la température globale étant la température qui affecte le réseau de guides d'ondes en faisceau dans son ensemble ;
   la première réponse en longueur d'onde optique est sensiblement égale à la première longueur d'onde prédéfinie à la température effective du premier composant optique ;
   la deuxième réponse en longueur d'onde optique est sensiblement égale à la deuxième longueur d'onde prédéfinie à la température effective du deuxième composant optique ;
   le régulateur de température est adapté à déterminer un point de consigne vers lequel le régulateur de température, en fixant la puissance dissipée dans le premier élément chauffant, amène des indications de température de l'élément capteur de température durant une deuxième période consécutive à la première période en :

calculant un premier écart entre une température effective nominale du premier composant et l'estimation de la température globale,
calculant un rapport entre la première constante thermique et la deuxième constante thermique,
calculant un premier produit du premier écart et du rapport, et
ajoutant le premier produit à l'estimation de la température globale pour obtenir le premier point de consigne ; et

le régulateur de température est adapté à déterminer un deuxième point de consigne auquel le régulateur de température fixe la puissance dissipée par le deuxième élément chauffant en :

calculant un deuxième produit de la deuxième constante thermique et de la puissance dissipée dans le premier élément chauffant,
calculant un deuxième écart entre la température effective nominale du deuxième composant et la température effective nominale du premier composant,
calculant une somme en ajoutant le deuxième produit au deuxième écart, et
divisant la somme par la troisième constante thermique pour obtenir le deuxième point de consigne,

lequel élément capteur de température est un capteur de température simple.

2.  Dispositif optique intégré selon la revendication 1, dans lequel le régulateur de température comprend un régulateur de température du type proportionnel intégral dérivé.

3.  Dispositif optique intégré selon la revendication 1, dans lequel l'élément capteur de température comprend un détecteur de température à résistance.

4.  Dispositif optique intégré selon la revendication 1, dans lequel le régulateur de température réalise un réglage itératif de la puissance dissipée dans le premier élément chauffant pour amener la réponse en longueur d'onde optique vers la longueur d'onde prédéfinie.

5.  Dispositif optique intégré selon la revendication 2, dans lequel la durée de la première période est de l'ordre d'une constante de temps thermique caractérisant la propagation de variations de la puissance dissipée dans le premier élément chauffant en variations de la réponse en longueur d'onde optique.

6.  Dispositif optique intégré selon la revendication 1, dans lequel au moins un des premier et deuxième éléments chauffants comprend une couche conductrice mince gravée appliquée sur au moins un des réseaux de guides d'ondes en faisceau.

7.  Procédé pour stabiliser la température d'un premier composant optique et d'un deuxième composant optique d'un dispositif optique au moyen d'un élément capteur de température, lequel élément capteur de température est un capteur de température simple, le premier composant optique présentant une première réponse en longueur d'onde optique qui est une fonction de la température du premier composant optique, la première réponse en longueur d'onde optique étant égale à une première longueur d'onde prédéfinie lorsque le premier composant optique se trouve à une température effective, le deuxième composant optique présentant une deuxième réponse en longueur d'onde optique qui est une fonction de la température du deuxième composant optique, la deuxième réponse en longueur d'onde optique étant égale à une deuxième longueur d'onde prédéfinie lorsque le deuxième composant optique se trouve à une température effective, le procédé comprenant les étapes consistant à :

recevoir des indications de température en provenance de l'élément capteur de température sur le dispositif optique ; et
réguler une première puissance fournie à un premier élément chauffant appliqué à proximité du premier composant optique de manière à amener une température du premier composant optique vers la température effective, laquelle étape consistant à réguler la première puissance comprend l'étape consistant à utiliser les indications de température dans une boucle de rétroaction ; et
réguler une deuxième puissance fournie à un deuxième élément chauffant appliqué sur le dispositif optique à proximité du deuxième composant optique de manière amener une température du deuxième composant optique vers la température effective, laquelle étape consistant à réguler la deuxième puissance comprend l'étape consistant à modifier la deuxième puissance selon une quantité qui est linéairement proportionnelle à la première puissance, ladite proportionnalité linéaire étant égale à une première constante majorée du produit d'une deuxième constante et de la première puissance fournie au premier élément chauffant.

**8.** Procédé selon la revendication 7, dans lequel le premier dispositif optique comprend un élément chauffant gravé efficace appliqué sur le réseau de guides d'ondes en faisceau.

**9.** Dispositif optique intégré selon la revendication 1, dans lequel le premier élément chauffant comprend un premier élément chauffant gravé efficace, le deuxième élément chauffant comprend un deuxième élément chauffant gravé efficace, le premier composant optique comprend un premier réseau de guides d'ondes en faisceau et le deuxième composant optique comprend un deuxième réseau de guides d'ondes en faisceau.

**10.** Dispositif optique intégré selon la revendication 1, dans lequel la première longueur d'onde prédéfinie est égale à la deuxième longueur d'onde prédéfinie.

**11.** Dispositif optique intégré selon la revendication 6, dans lequel l'élément capteur de température comprend une deuxième couche mince conductrice gravée en premier matériau appliquée à proximité du premier réseau de guides d'ondes en faisceau.

**12.** Procédé selon la revendication 7, dans lequel ladite proportionnalité linéaire est donnée par l'équation :

$$W^A = \frac{T_\lambda^A(\text{design}) - T_\lambda^B(\text{design}) + \frac{dT_\lambda^B}{dW^B} * W^B}{\frac{dT_\lambda^A}{dW^A}}$$

dans laquelle

$W^A$ représente la deuxième puissance,
$W^B$ représente la première puissance,
(*design*) représente la température effective du deuxième composant optique,
(*design*) représente la température effective du premier composant optique,

$\frac{dT_\lambda^B}{dW^B}$ représente une constante thermique représentant un taux de variation d'une température du premier composant par rapport aux variations de la puissance dissipée dans le premier élément chauffant, et $\frac{dT_\lambda^A}{dW^A}$

représente une constante thermique représentant un taux de variation d'une température du deuxième composant par rapport aux variations de la puissance dissipée dans le deuxième élément chauffant.

FIG. 1

FIG 2A

EP 1 969 405 B1

FIG 2B

23

**FIG. 3**

**FIG. 4**

**FIG. 5**

EP 1 969 405 B1

```
        ( START )
            |
            v
    +---------------+
    |     605       |
    |    n = 1      |
    +---------------+
            |
            v
    +---------------+
    |     610       |
    | OBTAIN Tr(1)  |
    +---------------+
            |
            v
    +---------------+
    |     615       |
    | Te(1) = Tr(1) |
    +---------------+
            |                              ( B  from FIG 6B )
            v <---------------------------
    +---------------------------------------------------+
    |                    620                            |
    |                                    [ (dTr/dw) ]   |
    | Ts(n) = Te(n) + (T2(design) - Te(n)) * [---------]|
    |                                    [ (dT2/dw) ]   |
    +---------------------------------------------------+
            |
            v
    +---------------+
    |     625       |
    | Set Point → Ts(n)|
    +---------------+
            |
            v
    +---------------+
    |     630       |
    | WAIT FOR THERM|
    | EQUILIBRIUM   |
    +---------------+
            |
            v
    +---------------+
    |     635       |
    |   n = n+1     |
    +---------------+
            |
            v
    ( A. To FIG 6B )
```

FIG. 6A

27

FIG. 6B

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Individual control of multiple AWGs on a monolithic chip using integrated thin film heaters and sensors. **YAN M et al.** 2005 OPTICAL FIBER COMMUNICATIONS CONFERENCE TECHNICAL DIGEST. IEEE, 06 March 2005, vol. 2, 87-89

- 1 Omega Drive, Stamford, CT. Omega Engineering, Inc,